# EUROPÄISCHE PATENTSCHRIFT

(11) **EP 2 929 156 B1**
(45) Veröffentlichungstag und Bekanntmachung des Hinweises auf die Patenterteilung: **09.08.2017**
(21) Anmeldenummer: 13771388.9
(22) Anmeldetag: 25.09.2013
(51) Int. Cl.: F01N 3/28, F01N 3/20, B01F 5/06

(54) **MISCHER ZUR NACHBEHANDLUNG VON ABGASEN**
MIXER FOR AFTERTREATMENT OF EXHAUST GASES
MÉLANGEUR POUR LE TRAITEMENT DE GAZ D'ÉCHAPPEMENT

(30) Priorität: 07.12.2012 DE 202012011764 U
(43) Veröffentlichungstag der Anmeldung: 14.10.2015
(73) Patentinhaber: Eberspächer catem GmbH & Co. KG, 76863 Herxheim (DE)
(72) Erfinder: GSCHWIND, Thomas, 67098 Bad Dürkheim (DE)
(74) Vertreter: Grünecker Patent- und Rechtsanwälte PartG mbB
(86) Internationale Anmeldenummer: PCT/EP2013/002878
(87) Internationale Veröffentlichungsnummer: WO 2014/086440

(56) Entgegenhaltungen:
- EP-A1- 0 894 523
- WO-A2-2008/024535
- DE-A1-102005 063 081
- FR-A3- 2 900 439

## Beschreibung

Die vorliegende Erfindung betrifft einen Mischer für eine Vorrichtung zur selektiven katalytischen Reduktion von Abgasen von Brennkraftmaschinen. Insbesondere betrifft die vorliegende Erfindung einen Mischer, der zur gleichmäßigen Verteilung eines in den Abgasstrom eingebrachten Reduktionsmittels dient.

Bei der Kraftstoffverbrennung in einer Brennkraftmaschine (z. B. Diesel- oder Ottomotor) entstehen als unerwünschte Nebenprodukte unter anderem Stickoxide (NOₓ). Im Interesse der Reinhaltung der Luft ist es wünschenswert, den NOₓ-Gehalt im Abgas zu reduzieren. Ein hierfür bekanntes Verfahren ist die sogenannte selektive katalytische Reduktion (abgekürzt SCR nach dem englischen Begriff selective catalytic reduction). Dies ist eine Technik zur Reduktion von Stickoxiden in Abgasen, insbesondere von Motoren. Bei der SCR findet eine chemische Reaktion an einem Katalysator (SCR-Katalysator) statt. Als Katalysatoren für SCR sind Metalloxidmischungen (zum Beispiel Titandioxid, Vanadiumpentoxid und Wolframdioxid) oder Zeolithe (H-Zeolithe), bzw. auch Mischungen von Metalloxiden mit Zeolith geeignet.

Zum Ablauf der katalytischen Reaktion wird Ammoniak (NH₃) benötigt, welches dem Abgas in geeigneter Form zugeführt werden muss. Die Produkte der Reaktion sind Wasser (H₂O) und Stickstoff (N₂). Die chemische Reaktion am SCR-Katalysator ist selektiv, das heißt es werden bevorzugt die Stickoxide (NO, NO₂) reduziert, während unerwünschte Nebenreaktionen (wie zum Beispiel die Oxidation von Schwefeldioxid zu Schwefeltrioxid) weitgehend unterdrückt werden.

Da Ammoniak unter den bei einem Verbrennungsmotor vorherrschenden physikalischen Bedingungen in gasförmigem Zustand vorliegt, erfolgt seine Zuführung zum Ort der selektiven katalytischen Reduktion vorzugsweise indirekt, in Form einer wässrigen Harnstofflösung (unter dem Namen AdBlue bekannt). Diese lässt sich - anders als das gasförmige Ammoniak - einfach in einem Zusatztank im Kraftfahrzeug mitführen. Bei der Verwendung wässriger Harnstofflösung zur Zuführung des Reduktionsmittels macht man sich zu nutze, dass Harnstoff in einer mehrere Schritte umfassenden thermolytisch-hydrolytischen Reaktion zu Ammoniak (und Kohlendioxid) zersetzt werden kann. Für einen optimalen Ablauf einer solchen Zersetzungsreaktion sind hinreichend hohe Temperaturen (vorzugsweise über 200°C, weiter vorzugsweise mindestens ca. 350°C) erforderlich. Der Hydrolyseschritt wird weiterhin vorzugsweise katalytisch unterstützt.

Weitere Details bezüglich der SCR und der Gewinnung von Ammoniak durch Zersetzung von in wässriger Lösung als AdBlue zugeführtem Harnstoff sind zum Beispiel in der europäischen Patentanmeldung EP 2 325 452 A1 beschrieben.

Für einen optimalen Ablauf der katalytischen Reaktionen ist es erforderlich, die wässrige Harnstofflösung bzw. das aus dieser Lösung gebildete Ammoniak am Katalysatoreingang möglichst gleichmäßig im Abgasstrom und damit über die Katalysatoroberfläche zu verteilen. Hierdurch wird eine hohe Effizienz bei der NOₓ-Reduzierung erreicht. Die Verteilung wird von Design und Geometrie der Abgasanlagen stark beeinflusst. Zur Verbesserung der Verteilung (um möglichst eine annähernde stöchiometrische Gleichverteilung von Stickoxiden und Ammoniak am Katalysatoreintritt zu erreichen) werden in der Regel zusätzliche Mischer eingesetzt, die die Aufbereitung und Verteilung des im SCR-Katalysator zugeführten Gemischs aus Abgasen und Reduktionsmittel fördern. Ein solcher Mischer ist zum Beispiel aus der DE102005063081 bekannt.

Es ist ein Nachteil der bekannten Abgas- und Mischersysteme, dass es - je nach der verwendeten Geometrie in unterschiedlich starkem Maße - zu Ablagerungen von festem Harnstoff oder bei der thermischen Zersetzung von Harnstoff entstehenden unerwünschten Zwischenprodukten (zum Beispiel Cyanursäure, Melanin oder andere feste Ablagerungen) kommt. Insbesondere am Beginn des Motorbetriebs (nach einem Motorstart), so lange die Abgastemperaturen noch niedrig sind, entstehen Ablagerungen von Harnstoff an den Mischerelementen (Schaufeln) des Mischers, da der Wasserbestandteil des AdBlue verdampft und Rückstände auf den Schaufeln verbleiben. Der Schmelzpunkt von Trockenharnstoff liegt bei 132°C. Hierbei erfolgt die Bildung der unerwünschten festen Ablagerungen umso stärker, je niedriger die Abgastemperaturen sind. Die Abgastemperaturen verringern sich durch die Einspritzung des kalten AdBlue zusätzlich. Es ist wünschenswert, solche Ablagerungen zu vermeiden. Darüber hinaus benötigt auch SCR-Reaktion selbst möglichst hohe Abgastemperaturen. Insbesondere sind im Start- oder Schubbetrieb die Abgastemperaturen von Dieselmotoren so niedrig, dass eine NOₓ-Umsetzung im SCR-Katalysator nicht erfolgen kann.

Es ist Aufgabe der vorliegenden Erfindung, einen verbesserten Mischer für eine Vorrichtung zur katalytischen Reduktion von Abgasen von Brennkraftmaschinen bereitzustellen, der die oben beschriebenen Nachteile überwindet, und insbesondere die Entstehung von Ablagerungen vermeidet bzw. eine Reduzierung bereits bestehender Ablagerungen im Betrieb ermöglicht. Ferner will die vorliegende Erfindung eine Vorrichtung zur katalytischen Reduktion von Abgasen angeben.

Zur Lösung der zuvor genannten Aufgabe wird mit der vorliegenden Erfindung ein Mischer mit den Merkmalen von Anspruch 1 angegeben. Des Weiteren wird mit dem nebengeordneten Anspruch 14 eine Vorrichtung zur selektiven katalytischen Reduktion von Abgasen angegeben, die den erfindungsgemäßen Mischer aufweist.

Gemäß der vorliegenden Erfindung wird ein Mischer für eine Vorrichtung zur selektiven katalytischen Reduktion von Abgasen von Brennkraftmaschinen, zur gleichmäßigen Verteilung eines in dem Abgasstrom eingebrachten Reduktionsmittels im Abgasstrom am Katalysatoreintritt bereitgestellt. Der Mischer umfasst eine vom Gemisch aus Abgas und Reduktionsmittel zu durchströmende Struktur von Mischerelementen. Die Mischerelemente sind zur direkten elektrischen Beheizung mit einem sie durchfließenden elektrischen Strom aufgrund ihres elektrischen Widerstands eingerichtet.

Es ist der besondere Ansatz der vorliegenden Erfindung, einen Mischer für die Zuführung des mit Reduktionsmittel versetzten Abgasstroms in einem SCR-Katalysator bereitzustellen, der es ermöglicht, die Bedingungen für die selektive katalytische Reaktion zu optimieren. Hierzu werden die zu einer optimalen Verteilung ausgebildeten Mischerelemente zusätzlich als Widerstandsheizelemente ausgebildet, und durch elektrischen Strom direkt beheizt. Dies ermöglicht es, sowohl eine optimale Verteilung des Reduktionsmittels über die Katalysatoroberfläche zu erreichen, als auch die Entstehung von Ablagerungen zu vermeiden bzw. im Heizbetrieb selbstständig wieder abzuschmelzen. Darüber hinaus werden durch die Wärmeabführung von dem beheizten Mischer in den Abgasstrom stromabwärts im SCR-Katalysator Temperaturen erreicht, die auch bei niedrigen Abgastemperaturen, beispielsweise nach dem Start oder im Schubbetrieb eines Dieselmotors, die NOₓ-Reduktion ermöglichen. Dies ist besonders wünschenswert, denn bei kalten Motortemperaturen ist der Schadstoffausstoß am größten. Wenn der Motor bereits heiß ist, liegen die Abgastemperaturen bei ca. 600 bis 900°C, so dass auf die zusätzliche Heizung auch verzichtet werden kann.

Vorzugsweise sind die Mischerelemente in Form von Schaufelblättern angeordnet. Eine solche Anordnung ermöglicht eine besonders effiziente Durchmischung (Verwirbelung) der Komponenten des Abgas-Reduktionsmittelgemischs zur angestrebten Gleichverteilung des Reduktionsmittels im Abgasstrom.

Gemäß der Erfindung ist die Struktur von Mischerelementen im Wesentlichen ringförmig angeordnet. Dies entspricht einer symmetrischen Anordnung bezüglich der Achse des Abgasstroms. Weiterhin ermöglicht ein solcher Aufbau auf besonders einfache Weise eine Reihenschaltung der einzelnen Mischerelemente untereinander, so dass keine komplizierte Struktur von Verkabelungen bzw. Kontaktpunkten zur Stromzuführung erforderlich ist. Vorzugsweise sind die einzelnen Mischerelemente untereinander in Reihe, in Form eines Heizkreises, elektrisch verbunden. Vorzugsweise sind die Mischerelemente fächerartig, teilweise überlappend gestaffelt angeordnet. Vorzugsweise umfasst das in den Abgasstrom eingebrachte Reduktionsmittel eine wässrige Harnstofflösung (im Bereich der Kraftfahrzeugtechnik als AdBlue bekannt). Diese kann durch eine mehrschrittige thermolytisch-hydrolytische Zersetzung in das zur katalytischen Reduktion der Stickoxide erforderliche Ammoniak umgesetzt werden. Hierbei wird der Hydrolyseschritt vorzugsweise durch einen zusätzlichen Hydrolysekatalysator unterstützt. Der Hydrolysekatalysator kann in Form einer Beschichtung auf den Mischerelementen angebracht sein. Alternativ oder zusätzlich kann ein Hydrolysekatalysator separat im Abgasstrom angeordnet sein.

Alternativ ist auch eine Zufuhr des Reduktionsmittels in fester Form möglich, zum Beispiel als feste Harnstoffpartikel. In diesem Fall ist es weiter vorteilhaft, wenn sich zwischen der Zufuhr des Reduktionsmittels und dem Mischer zusätzlich ein Partikelfilter befindet, da dieser eine gleichmäßige Partikelverteilung befördert.

Vorzugsweise sind die Mischerelemente aus einer Heizleiterlegierung (Widerstandslegierung) gefertigt. Ein geeignetes Material ist zum Beispiel eine Legierung aus Chrom, Eisen und Aluminium (CrFeAl). Die direkte Herstellung der Mischerelemente aus dem als Heizwiderstand geeigneten Material ermöglicht einen einfachen konstruktiven Aufbau und eine einfache Herstellung. Insbesondere ist hierbei eine einstückige Ausbildung der Mehrzahl in Reihe geschalteter Mischerelemente bevorzugt.

Gemäß einer bevorzugten Ausführungsform erfolgt die elektrische Kontaktierung zur Stromzufuhr über einen Bolzen, der über eine Buchse isoliert mit dem Mischer verbunden ist. Vorzugsweise erfolgt die Stromeinleitung in radialer Richtung bezüglich des Abgasstroms. Dies hat den Vorteil, dass eine mögliche Beeinflussung des Abgasstroms durch die Stromeinleitung vermieden wird. Alternativ vorzugsweise erfolgt die Stromeinleitung in axialer bzw. koaxialer Richtung bezüglich des Abgasstroms. Dies hat den Vorteil einer besonders platzsparenden Realisierung, da keine über den Umfang der Mischereinrichtung in radialer Richtung hinausragenden Bauteile erforderlich sind.

Vorzugsweise erfolgt auch die Masseanbindung über einen Bolzen, der über eine Buchse isoliert mit dem Mischer verbunden ist. Alternativ vorzugsweise kann die Masseanbindung auch erfolgen, ohne dass hierfür ein spezielles Bauteil erforderlich ist. Hierfür werden für die Fixierung der Mischerelemente vorgesehene Bauteile gleichzeitig zur Masseanbindung verwendet.

Vorzugsweise sind die Mischerelemente weiterhin mit Laschen zur Fixierung versehen. Die Laschen liegen formschlüssig in Isolationsplatten, welche wiederum in Rohrstückflanschen gehalten werden. Im Fall einer solchen Ausführungsform kann die Masseanbindung direkt über die auf Masse liegenden Rohrstücke erfolgen.

Weiter vorzugsweise wird die Steifigkeit des Mischers durch Sicken in den Mischerelementen erhöht. Ebenfalls vorzugsweise sind die zur Fixierung dienenden Isolationsplatten aus Mikanit (einem gepressten Glimmer) hergestellt.

Gemäß einer bevorzugten Weiterbildung der vorliegenden Erfindung variiert der Widerstand einzelner Mischerelemente. Demnach hat ein beispielsweise bestimmtes Mischerelement einen anderen elektrischen Widerstand als ein anderes Mischerelement. Dabei kann der elektrische Widerstand auch innerhalb eines einzelnen Mischerelementes variieren. Der variierende Widerstand führt zu einem entsprechenden Spannungsabfall und damit zu einer vermehrten Wärmeabgabe. Der variierende elektrische Widerstand kann beispielsweise durch eine Verringerung des wirksamen Leitungsquerschnittes erreicht werden. Durch Anpassung des elektrischen Widerstandes innerhalb eines einzelnen Mischerelementes kann dementsprechend dort eine erhöhte Wärmemenge bereitgestellt und abgegeben werden, wo aufgrund der Strömungsbedingungen innerhalb des Mischers eine erhöhte Wärmeabgabe an das durch den Mischer strömende Fluid gewünscht ist.

Andererseits kann durch einen demgegenüber verminderten elektrischen Widerstand insbesondere ein äußerer, Gehäusenaher Randbereich der Mischerelemente oder auch ein Befestigungsabschnitt dort, wo ein Mischerelement gehäuseseitig befestigt ist, eine geringe Erwärmung dieser Bereich bewirkt werden. Durch die Variation des elektrischen Widerstandes kann die jeweils abgegebene Wärmemenge danach räumlich auf diejenigen Bereiche konzentriert werden, in denen das zu erwärmende Fluid überwiegend strömt. Auch kann durch die lokale Verteilung der Wärmeabgabe innerhalb der Mischerelemente bzw. relativ zu einzelnen Mischerelementen vermieden werden, dass sich ein die Mischerelemente haltendes Gehäuse übermäßig stark erwärmt.

Weitere vorteilhafte Ausgestaltungen sind Gegenstand von Unteransprüchen.

Mit der vorliegenden Erfindung wird ferner eine Vorrichtung zur selektiven katalytischen Reduktion von Abgasen einer Brennstoffkraftmaschine angegeben. Hierbei handelt es sich insbesondere um eine Brennstoffkraftmaschine in einem Kraftfahrzeug. Die Vorrichtung hat ein zu einem Mischer führendes Abgasrohr und ein Reduktionsmittelrohr, das mit einem Reservoir für Reduktionsmittel verbunden ist. Das Reduktionsmittelrohr mündet in Strömungsrichtung vor dem Mischer in das Abgasrohr. in Katalysator ist dem Mischer in Strömungsrichtung des zu behandelnden Gases nachgeordnet vorgesehen. Diese Vorrichtung umfasst den erfindungsgemäßen Mischer gemäß einem der Ansprüche 1 bis 14.

Dabei enthält das Reduktionsmittelreservoir vorzugsweise wässrige Harnstofflösung als Reduktionsmittel.

Im Folgenden wird die vorliegende Erfindung anhand bevorzugter Ausführungsformen im Zusammenhang mit den beiliegenden Zeichnungen erläutert, in denen:
- Fig. 1: eine Übersichtsdarstellung der Vorrichtung zur Nachbehandlung von Abgasen einer Brennkraftmaschine ist, in der ein erfindungsgemäßer Mischer eingesetzt wird;
- Fig. 2A: eine perspektivische Übersichtsdarstellung einer Ausführungsform eines erfindungsgemäßen Mischers ist;
- Fig. 2B: eine Seitenansicht der Ausführungsform aus Fig. 2A darstellt;
- Fig. 3: eine Explosionsdarstellung einer Ausführungsform eines erfindungsgemäßen Mischers ist;
- Fig. 4a: eine perspektivische Draufsicht ringförmig angeordneter Mischerelemente einer Abwandlung des in den Figuren 1 bis 3 gezeigten Ausführungsbeispiels der vorliegenden Erfindung;
- Fig. 4b: eine Seitenansicht des in Fig. 4a gezeigten Ausführungsbeispiels;
- Fig. 4c: eine Draufsicht auf das in Figuren 4a und 4b gezeigte Ausführungsbeispiel; und
- Fig. 4d: eine Abwicklung des in Figuren 4a bis 4c dargestellten Ausführungsbeispiels zeigt.

Die folgende detaillierte Beschreibung dient der Darstellung der Erfindung anhand ausgewählter Ausführungsformen und unter Bezug auf die Zeichnungen. Die vorliegende Erfindung, wie in den Schutzansprüchen definiert, ist jedoch nicht auf die nachstehend beschriebenen Ausführungsformen beschränkt.

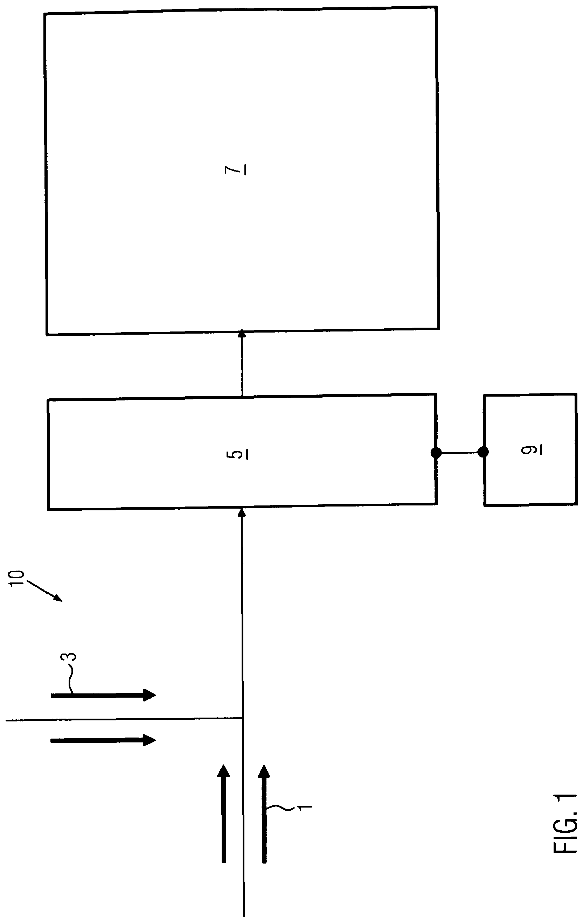

Fig. 1 zeigt ein Übersichtsschema einer Vorrichtung 10 zur selektiven katalytischen Reduktion von Abgasen gemäß einer Ausführungsform der vorliegenden Erfindung. Die Abgase einer Brennkraftmaschine, zum Beispiel eines Kraftfahrzeugmotors sind in diesem Schema in Form des von links nach rechts strömenden Abgasstroms 1 dargestellt. Diesen wird das Reduktionsmittel, vorzugsweise in Form wässriger Harnstofflösung, AdBlue, zugeführt. Die wässrige Harnstofflösung 3 wird in flüssiger Form vor dem SCR-Katalysator 7 in den Abgasstrom 1 eingedüst. Der Strom des Reduktionsmittels 3 ist im Schema von oben nach unten dargestellt. Der vereinigte Strom aus Abgasen und Reduktionsmittel durchströmt einen Mischer gemäß der vorliegenden Erfindung. Dieser dient einer besseren Verteilung des Reduktionsmittels im Abgasstrom. Eine detaillierte Beschreibung von Ausführungsformen eines erfindungsgemäßen Mischers wird weiter unten unter Bezug auf die nachfolgenden Figuren angegeben.

Gemäß der vorliegenden Erfindung ist der Mischer 5 mit einer Stromversorgung 9 verbunden, die es ermöglicht, die Mischerelemente des Mischers direkt elektrisch zu beheizen. Der in dem Mischer gut durchmischte und erwärmte Strom aus Abgasen und Reduktionsmittel trifft auf den Katalysator für die selektive katalytische Reduktion (SCR-Katalysator 7). Der Katalysator ist vorzugsweise auf einem geeigneten Trägermaterial so angeordnet, dass eine möglichst große Katalysatoroberfläche bezüglich des durchströmenden Gemischs wirksam wird. Dies kann zum Beispiel mit einer wabenartigen Struktur geschehen.

Zur katalytischen Unterstützung der Zersetzung des in wässriger Lösung zugesetzten Harnstoffs, um das für die eigentliche selektive katalytische Reaktion erforderliche Ammoniak zu erhalten, kann, vorzugsweise zwischen Mischer 5 und SCR-Katalysator 7, noch ein Hydrolysekatalysator vorgesehen sein (nicht gezeigt). Alternativ könnte ein solcher Katalysator auch auf dem Weg zwischen der Zugabe des Reduktionsmittels 3 und dem Mischer 5 vorgesehen sein. Schließlich kann, weiter alternativ die Hydrolyse im Mischer selbst, durch Beschichtung der Mischerelemente mit einem als Hydrolysekatalysator geeigneten Material, unterstützt werden. Als Hydrolysekatalysator sind Metalloxide, wie zum Beispiel Titandioxid oder Aluminiumdioxid, Siliziumdioxid oder Zirkoniumdioxid geeignet. Insbesondere kann der Mischer gemäß einer bevorzugten Ausführungsform eine Beschichtung aufweisen, welche sowohl die Hydrolyse als auch die selektive katalytische Reaktion fördert. Dies kann zum Beispiel durch ein Gemisch von Metalloxidmischungen mit H-Zeolith erfolgen. Dadurch kann der nachgeschaltete SCR-Katalysator hinsichtlich seiner Größe, insbesondere seiner katalytisch aktiven Oberfläche reduziert werden. Weiterhin hat die Verwendung beschichteter Mischerelemente gegenüber einem separaten Hydrolysekatalysator den Vorteil, dass neben dem Mischer keine weiteren Teile erforderlich sind, welche den Druckverlust im Abgasstrom erhöhen.

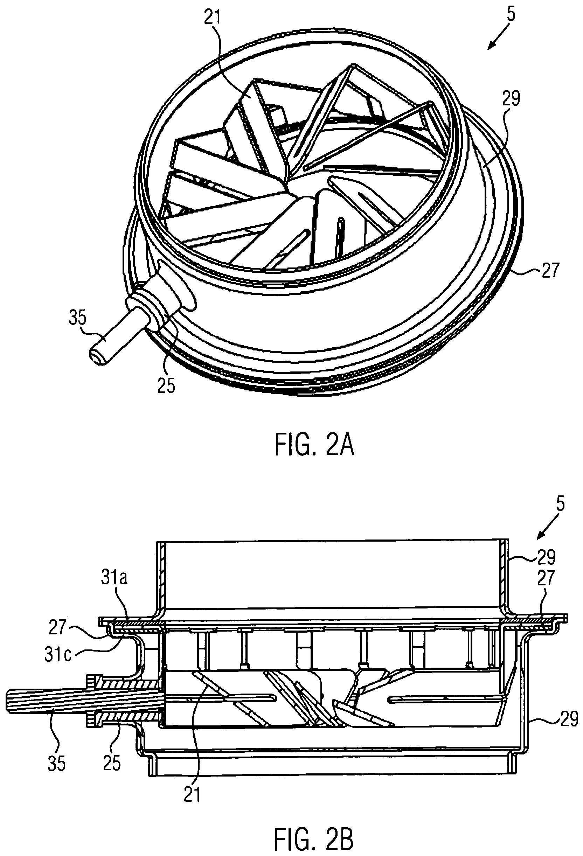

Fig. 2 zeigt eine Prinzipdarstellung eines Mischers 5 gemäß einer Ausführungsform der vorliegenden Erfindung. Dabei ist in Fig. 2A eine perspektivische Darstellung, aus der Perspektive der Draufsicht leicht schräg von oben, angegeben. Fig. 2B zeigt eine Schnittdarstellung in der Seitenansicht.

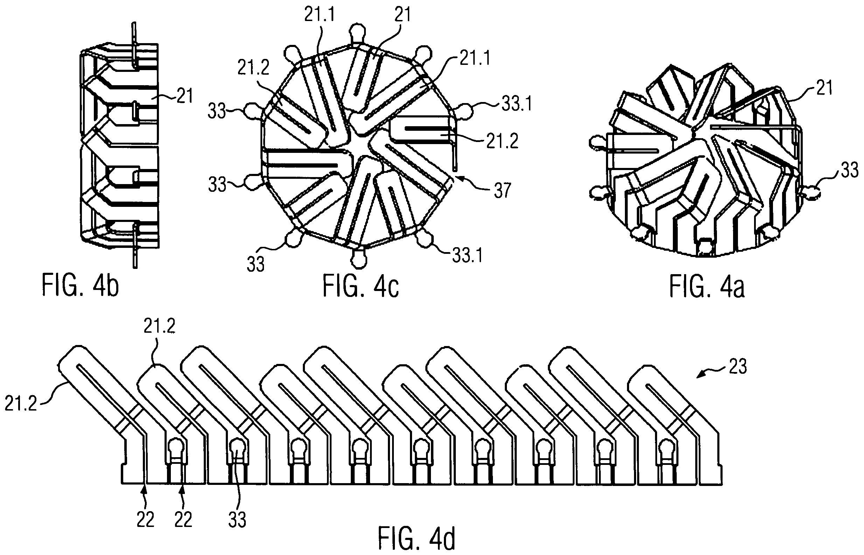

In der Ausführungsform gemäß Fig. 2 weisen die Mischerelemente 21 im Wesentlichen die Form einer Schaufel auf. Die spezielle Struktur der Mischerelemente, mit einem Schlitz zwischen den am jeweiligen Ende der Schaufel verbundenen Teilen ergibt sich daraus, dass die Mischerelemente zum Stromdurchfluss geeignet sein müssen, und hierfür aus einem Strom leitenden Material, vorzugsweise durch Biegen und Stanzen, hergestellt werden. Die schaufelförmigen Mischerelemente 21 in der gezeigten Ausführungsform weisen eine Abkantung von ca. 90° ("Sicke") auf. Diese dient zur mechanischen Versteifung des Mischerelements. Weiterhin sind gemäß der gezeigten Ausführungsform die einzelnen Mischerelemente 21 in Form einer im Wesentlichen ringförmigen Struktur angeordnet. Diese Struktur hat wie in Fig. 2A gezeigt, weiterhin vorzugsweise die Form eines Fächers, das heißt es kommt in der Draufsicht (in axialer Richtung des Abgasstroms gesehen) zu einer teilweisen Überlappung jeweils benachbarter Mischerelemente 21. Wie insbesondere die Figuren 4c und 4d verdeutlichen, sind die Mischerelemente 21 durch Stanzen und Biegen aus einem einheitlichen Blechstreifen 23 gebildet. Dabei werden in Längsrichtung des Blechstreifens 23 alternierend relativ längere Mischerelemente 21.1 und relative kürzere Mischerelemente 21.2 ausgeformt. Die Mischerelemente 21 sind dementsprechend Bestandteil eines Kontinuums. Zwischen einzelnen Mischerelementen werden zunächst durch Stanzen Laschen 33 frei geschnitten, die bei der dem Stanzen nachfolgenden Biegebearbeitung aus der Ebene des Blechstreifens 23 herausgebogen werden. Jedes der Mischerelemente 21 weist eine mittlere Nut 22 auf, die sich zu einem unteren Rand des Blechstreifens 23 jeweils öffnet. So ergibt sich eine Leiterbahn für den Strom, über welchen der Stromfluss mäandrierend durch den Blechstreifen 23 hindurchgeführt wird.

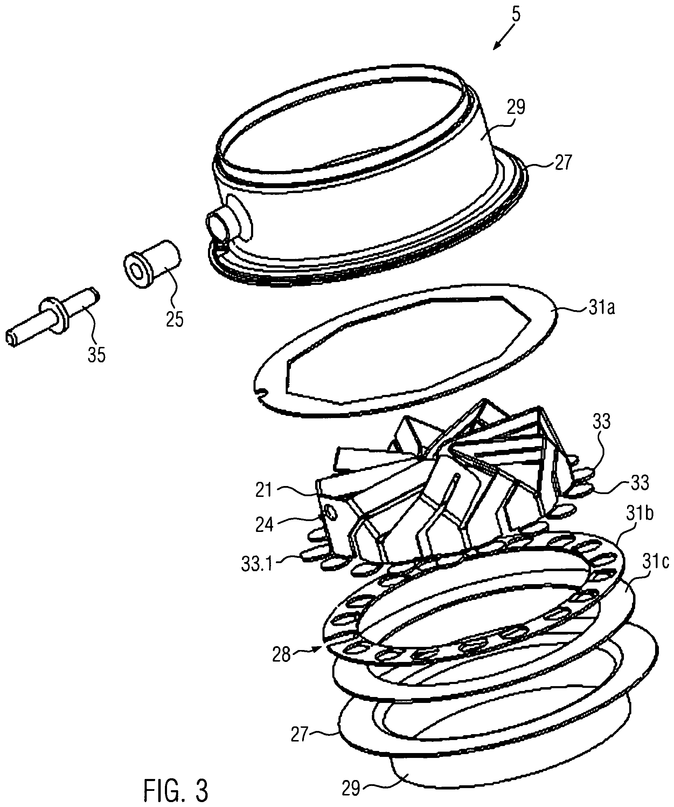

Bei der Biegebearbeitung des Blechstreifens 23 werden auch die einzelnen Mischerelemente 21 unter Ausbildung der zuvor beschriebenen Sicke in die radial innere Richtung umbogen, wohingegen die seitlichen Laschen 33 in die gegenüber liegende, d.h. radial äußere Richtung umbogen werden. Danach wird der gesamte Blechstreifen 23 ringförmig umbogen, so dass sich die einzelnen Mischerelemente 21 im radial inneren Bereich des ringförmigen Elementes fächerartig übereinander legen. Wie ersichtlich, überdecken die kleineren Mischerelemente 21.2 zumindest teilweise benachbarte längere Mischerelemente 21.1. Die vorderen und hinteren Enden des Blechstreifens 23 sind mit Abstand zueinander vorgesehen und lassen eine Trennung 37 frei. An dem einen Ende des Blechstreifens 23 wird eine Bohrung 24 ausgebildet, die in Fig. 3 dargestellt ist und die dem nachfolgend noch näher erläuterten Anschluss an die Mischerelemente 21 dient.

Durch die insbesondere aus den Figuren 3 und 4c ersichtliche Schrägstellung der einzelnen Mischerelemente 21 ergibt sich trotz der fächerartigen Struktur eine hinreichend große lichte Öffnung für das durchströmende Abgas-Reduktionsmittelgemisch, so dass der Strömungswiderstand nicht zu groß wird, und dadurch der Druckverlust des strömenden Gases im Mischer 5 begrenzt bleibt. Im gezeigten Beispiel erfolgt die Stromzufuhr über eine am peripheren Rand der Mischerstruktur vorgesehene Buchse 25. Als äußerer Abschluss der Mischerstruktur sind Rohrstücke 29 von vorzugsweise kreisförmigem Querschnitt vorgesehen. Diese weisen Flansche 27 auf, mit deren Hilfe die gesamte Mischerstruktur festgehalten wird.

Weitere Details der Struktur eines Mischers 5 gemäß einer Ausführungsform der vorliegenden Erfindung sind der in Fig. 3 gezeigten Explosionsdarstellung des Mischers zu entnehmen. Zentrales Element des Mischers 5 ist die ringförmig angeordnete fächerartige Struktur aus den im Wesentlichen schaufelförmigen Mischerelementen 21. Diese Struktur wird vorzugsweise aus einer Widerstandslegierung wie beispielsweise CrFeAl hergestellt, gestanzt und gebogen. Optional können die Mischerelemente 21 weiterhin eine katalytisch wirkende Beschichtung aufweisen (nicht dargestellt).

Die zuvor beschriebenen Laschen 33 dienen der Fixierung der Mischerelemente 21 zwischen den Rohrstückflanschen 27. Diese Laschen 33 sind zwischen äußeren Isolationsplatten 31a, 31c angeordnet. In der Explosionsdarstellung der Fig. 3 sind drei Isolationsplatten 31 gezeigt. Eine mittlere Isolationsplatte 31 b weist Aussparungen zur formschlüssigen Aufnahme der Laschen 33 (sowie eine weitere Aussparung im Bereich der Stromzuführung auf. Diese mittlere Isolationsplatte wird von oben und unten durch die zwei weiteren ringförmig ausgebildeten Isolationsplatten 31a, 31c gehalten. Die Isolationsplatten werden gemäß einer bevorzugten Ausführungsform aus Mikanit (einem gepressten Glimmer) hergestellt. Die Isolationsplatten 31 wiederum werden zwischen Rohrstückflanschen 27 gehalten, die von Rohrstücken 29 ausgebildet werden. Diese Rohrstücke 29 bilden den äußeren peripheren Abschluss der Mischerstruktur. Gemäß der dargestellten Ausführungsform ist eine Stromzuführung in radialer Richtung vorgesehen. Dabei erfolgt die elektrische Kontaktierung über einen Bolzen 35, welcher über eine Buchse 25 isoliert in dem in Fig. 3 oberen Rohstück 29 gehalten und mit der ringförmigen Struktur der Mischerelemente 21 fest verbunden ist. Die Rohrstücke 29 bilden im Wesentlichen das Gehäuse des Beispiels aus. Die Masseanbindung erfolgt entweder über einen zweiten Bolzen (nicht gezeigt) oder über eine direkte Anbindung an die auf Masse liegenden Rohrstücke. Bei dem in Fig. 3 gezeigten Ausführungsbeispiel ist zu erkennen, dass die obere Isolationsplatte 31a zwischen jeweils letzten seitlichen Laschen 33.1 eine radiale Einbuchtung 28 aufweist. Dort kann ein Kontaktelement zur elektrischen Verbindung des oberen Rohrstücks 29 mit dieser letzten Lasche 33 verbunden sein. Zwischen den jeweils letzten Laschen 33.1 befindet sich eine Trennung 37 in Form eines Schlitzes zwischen den freien Enden des ringförmig gebogenen Blechstreifens 23. Neben den in den Figuren gezeigten radial zum Abgasrohr abgehenden Bolzen sind auch axiale bzw. koaxiale Abgänge denkbar.

Wie ersichtlich, befindet sich die Bohrung 24 relativ weit entfernt von der zugehörigen letzten Lasche 33 des "ersten" Mischerelementes 21. So erfolgt der Spannungsabfall von der Bohrung 24 in den für die Wärmeabgabe besonders bedeutsamen, sich radial nach innen erstreckenden Schenkel des zugeordneten ersten Mischerelementes 21. Darüber hinaus kann durch einen relativ geringen elektrischen Widerstand desjenigen Abschnitts, der zwischen der Bohrung 24 und der zugehörigen letzten seitlichen Lasche 33.1 erstreckt, eine aktive Erwärmung bei einem fließenden elektrischen Strom in diesem Bereich vermieden oder jedenfalls stark reduziert werden. Damit bleibt die entsprechende letzte Lasche 33.1 relativ kühl, d.h. wird nicht oder nur sehr wenig erhizt. Eine entsprechende Maßnahme kann für die übrigen Laschen getroffen sein. Ein geringer elektrischer Widerstand kann beispielsweise durch einen vergrößerten Leitungsquerschnitt in diesem Bereich bewirkt werden, wohingegen der wirksame Leitungsquerschnitt innerhalb der sich radial erstreckenden Schenkel der Mischer 21 verringert werden kann. Er kann sich beispielsweise vom Außendurchmesser bis zum radial inneren Ende der jeweiligen Mischerelemente 21 kontinuierlich verringen, so dass sich eine maximale Wärmeabgabe an der radial innen liegenden Spitze des Mischerelementes 21 ergibt.

Die Figuren 4a bis 4d stellen verschiedene Ansichten der Mischerelemente 21 bzw. der aus ihnen gebildeten ringförmigen Struktur für sich allein betrachtet dar. Insbesondere ist in der Draufsicht nach Fig. 4c zu sehen, dass die Ringstruktur an einer Stelle die zuvor diskutierte Trennung 37 aufweist, um den Stromdurchfluss und damit die elektrische Beheizung zu ermöglichen. In Fig. 4d ist der Blechstreifen 23 vor dem Umbiegen, d.h. sind die Mischerelemente 21 linear nebeneinander dargestellt, d.h. in linearer, abgewickelter Form.

Hinsichtlich der erforderlichen Heizleistung kommt es grundsätzlich darauf an, dass diese ausreichend bemessen ist, um selbst dann, wenn die Temperatur der vom Motor kommenden Abgase, zum Beispiel nach dem Start oder im Schubbetrieb eines Dieselmotors deutlich niedriger liegen, das durchströmende Gemisch aus Abgasen und Reduktionsmittel so aufzuheizen, dass sich auf den Mischerelementen keine Ablagerungen bilden bzw. diese wieder abgeschmolzen werden, sowie vorzugsweise im Bereich des nachfolgenden SCR-Katalysators 7 eine optimale Reaktionstemperatur im Bereich von ca. 200°C bis 350°C oder darüber erreicht werden kann. Die Betriebsspannung ist durch die Spannung im Kraftfahrzeug-Bordnetz (herkömmlich vorzugsweise 12V (Volt)) vorgegeben. Je nach Bedarf im jeweiligen Einsatzbereich des Mischers sind jedoch auch andere Betriebsspannungen möglich. Bei gegebener Betriebsspannung kann die Leistung durch den Querschnitt und die Gesamtlänge durch die Mischerelemente gebildeten Heizkreise (in abgewickelter, gestreckter Form gedacht) variiert werden.

Lediglich beispielhaft sei folgende spezifische Ausführungsform angegeben: Es wird ein Heizleiter mit einem spezifischen Widerstand von 1,4 Ohm mm² m⁻¹, einer gestreckten Länge von 800 mm (Millimeter) und einem Querschnitt von 6 mm² verwendet. Der Durchmesser des ringförmig gebogenen Mischers 5 liegt hierbei bei etwa 63 mm. In einer solchen Ausführungsform beträgt die Leistung bei einer angelegten Spannung von 12V etwa 750W (Watt).

Zusammenfassend, betrifft die vorliegende Erfindung eine Vorrichtung 2 zur selektiven katalytischen Reduktion von Abgasen von Brennkraftmaschinen, zur gleichmäßigen Verteilung eines in den Abgasstrom 1 eingebrachten Reduktionsmittels 3 im Abgasstrom 1 am Katalysatoreintritt, wobei der Mischer eine vom Gemisch aus Abgas 1 und Reduktionsmittel 3 zu durchströmende Struktur von Mischerelementen 21 umfasst. Um die Ablagerung von Reduktionsmitteln an dem Mischer zu verhindern und eine optimale Temperatur für die nachfolgende SCR-Reaktion zu ermöglichen, wird mit der vorliegenden Erfindung vorgeschlagen, die Mischerelemente 21 zur elektrischen Beheizung mit einem sie durchfließenden elektrischen Strom aufgrund ihres elektrischen Widerstandes auszubilden. Insbesondere betrifft die Erfindung einen direkt elektrisch beheizbaren Mischer 5 für eine Anlage zur selektiven katalytischen Reduktion von Abgasen einer Brennkraftmaschine, zum Beispiel eines Kraftfahrzeugmotors. Durch die Direktbeheizung kann ein sehr hoher Wirkungsgrad in Bezug auf die eingesetzte Leistung erreicht werden. Die Wärme wird an den Stellen abgegeben, an denen sie gebraucht wird. Der Aufbau lässt sich insgesamt sehr kostengünstig gestalten. Die vorliegende Erfindung betrifft ferner eine Vorrichtung zur selektiven katalytischen Reaktion von Abgasen einer Brennkraftmaschine mit einem zu einem Mischer gemäß der vorliegenden Erfindung führenden Abgasrohr und einem mit einem Reservoir für Reduktionsmittel verbundenen Reduktionsmittelrohr, das in Strömungsrichtung vor dem Mischer 5 in das Abgasrohr mündet, und einem dem Mischer 5 in Strömungsrichtung nachgelagerten Katalysator 7.

### Bezugszeichenliste

- 10: Vorrichtung zur selektiven katalytischen Reduktion von Abgasen
- 1: Abgasstroms
- 3: Reduktionsmittel
- 5: Mischer
- 7: SCR-Katalysator
- 9: Stromversorgung
- 21: Mischerelemente
- 21.1: längeres Mischerelement
- 21.2: kürzeres Mischerelement
- 22: Nut
- 23: Blechstreifen
- 24: Bohrung
- 25: Buchse
- 27: Rohrstückflansch
- 28: Einbuchtung
- 29: Rohrstück
- 31: Isolationsplatten
- 33: seitliche Laschen
- 35: Bolzen
- 37: Trennung

## Patentansprüche

1. Mischer für eine Vorrichtung (10) zur selektiven katalytischen Reduktion von Abgasen von Brennkraftmaschinen, zur gleichmäßigen Verteilung eines in den Abgasstrom (1) eingebrachten Reduktionsmittels (3) im Abgasstrom (1) am Katalysatoreintritt, wobei der Mischer eine vom Gemisch aus Abgas (1) und Reduktionsmittel (3) zu durchströmende Struktur von Mischerelementen (21) zur direkten elektrischen Beheizung mit einem sie durchfließenden elektrischen Strom auf Grund ihres elektrischen Widerstands umfasst,
**dadurch gekennzeichnet, dass**
die Mischerelemente (21) im Wesentlich ringförmig angeordnet sind und einzelne Mischerelemente (21) untereinander in Reihe elektrisch verbunden sind, so dass sie einen Heizkreis bilden.

2. Mischer nach Anspruch 1, **dadurch gekennzeichnet, dass** die Mischerelemente die Form von Schaufelblättern haben.

3. Mischer nach einem der Ansprüche 1 bis 2, **dadurch gekennzeichnet, dass** die Mischerelemente (21) eine Heizleiterlegierung umfassen.

4. Mischer nach einem der Ansprüche 1 bis 3, **dadurch gekennzeichnet, dass** die elektrische Kontaktierung zur Stromzufuhr über einen Bolzen (35) erfolgt, der über eine Buchse (25) isoliert mit einem Gehäuse (29) des Mischers (5) verbunden ist.

5. Mischer nach einem der Ansprüche 1 bis 4, **dadurch gekennzeichnet, dass** die Stromeinleitung in radialer Richtung bezüglich des Abgasstroms (1) erfolgt.

6. Mischer nach einem der Ansprüche 1 bis 4, **dadurch gekennzeichnet, dass** die Stromeinleitung in axialer bzw. koaxialer Richtung bezüglich des Abgasstroms (1) erfolgt.

7. Mischer nach einem der Ansprüche 1 bis 6, **dadurch gekennzeichnet, dass** die Masseanbindung über einen Bolzen erfolgt, der über eine Buchse isoliert mit einem Gehäuse (29) des Mischers verbunden ist.

8. Mischer nach einem der Ansprüche 1 bis 6, **dadurch gekennzeichnet, dass** die Masseanbindung über ein auf Masse liegendes Rohrstück (29) eines Gehäuses des Mischers erfolgt.

9. Mischer nach einem der vorherigen Ansprüche, **dadurch gekennzeichnet, dass** die Mischerelemente (21) durch Stanzen und Biegen aus einem Blechstreifen (23) hergestellt sind und der die Mischerelemente (21) umfassende Blechstreifen (23) ringförmig umbogen ist.

10. Mischer nach einem der Ansprüche 1 bis 9, **dadurch gekennzeichnet, dass** die Mischerelemente (21) mit Laschen (33) zur Fixierung versehen sind, wobei die Laschen (33) zwischen Isolationsplatten (31) aufgenommen sind, die zwischen Rohrstückflanschen (27) von Rohrstücken (29) eines Gehäuses des Mischers gehalten sind.

11. Mischer nach einem der Ansprüche 1 bis 10, **dadurch gekennzeichnet, dass** die Mischerelemente (21) zur mechanischen Versteifung mit Sicken versehen sind.

12. Mischer nach einem der Ansprüche 10 oder 11, **dadurch gekennzeichnet, dass** die Isolationsplatten (31) Mikanit umfassen.

13. Mischer nach einem der vorherigen Ansprüche, **dadurch gekennzeichnet, dass** der elektrische Widerstand einzelner Mischerelemente variiert.

14. Vorrichtung zur selektiven katalytischen Reduktion von Abgasen an einer Brennkraftmaschine, insbesondere einer Kfz-Brennkraftmaschine, mit einem zu einem Mischer (5) führenden Abgasrohr und einem zu einem Reservoir für Reduktionsmittel (3) führenden Reduktionsmittelrohr, das in Strömungsrichtung vor dem Mischer (5) in das Abgasrohr mündet und einem dem Mischer (5) in Strömungsrichtung nachgelagerten Katalysator (7),
**dadurch gekennzeichnet,**
**dass** der Mischer (5) nach einem der Ansprüche 1 bis 13 ausgebildet ist.

## Claims

1. Mixer for a device (10) for selective catalytic reduction of exhaust gases from internal combustion engines, for uniform distribution of a reducing agent (3) in the exhaust gas stream (1) that is introduced into said exhaust gas stream (1) at the catalyst inlet, wherein said mixer comprises a structure of mixer elements (21) through which the mixture of exhaust gas (1) and reducing agent (3) is to flow and which are adapted for direct electrical heating with an electric current flowing through them due to their electrical resistance,
**characterized in that**
said structure of mixer elements (21) is arranged substantially ring-shaped and that said individual mixer elements (21) are electrically interconnected in series so as to form a heating circuit.

2. Mixer according to claim 1, **characterized in that** said mixer elements have the shape of turbine blades.

3. Mixer according to one of the claims 1 to 2, **characterized in that** said mixer elements (21) comprise a heating line alloy.

4. Mixer according to one of the claims 1 to 3, **characterized in that** the electrical contact to the power supply is effected via a pin (35) which insulated by a sleeve (25) is connected to a housing (29) of said mixer (5).

5. Mixer according to one of the claims 1 to 4, **characterized in that** said power supply is effected in the radial direction relative to said exhaust gas stream (1).

6. Mixer according to one of the claims 1 to 4, **characterized in that** said power supply is effected in the axial or coaxial direction relative to said exhaust gas stream (1).

7. Mixer according to one of the claims 1 to 6, **characterized in that** the connection to ground is effected via a pin which insulated by a sleeve is connected to a housing (29) of said mixer.

8. Mixer according to one of the claims 1 to 6, **characterized in that** said connection to ground is effected via a pipe section (29) contacting ground of a housing of said mixer.

9. Mixer according to one of the preceding claims, **characterized in that** said mixer elements (21) are produced from a sheet metal strip (23) by punching and bending and said sheet metal strip (23) comprising said mixer elements (21) is bent to a ring shape.

10. Mixer according to one of claims 1 to 9, **characterized in that** said mixer elements (21) are for fixation provided with tabs (33), where said tabs (33) are received between insulation plates (31) that are held between pipe section flanges (27) of pipe sections (29) of a housing of said mixer.

11. Mixer according to one of the claims 1 to 10, **characterized in that** said mixer elements (21) are for mechanical rigidity provided with creases.

12. Mixer according to one of the claims 10 or 11, **characterized in that** said insulation plates (31) comprise micanite.

13. Mixer according to one of the preceding claims, **characterized in that** the electrical resistance of individual mixer elements varies.

14. Device for selective catalytic reduction of exhaust gases in an internal combustion engine, in particular a motor vehicle combustion engine, having an exhaust gas pipe leading to a mixer (5) and having a reducing agent pipe leading to a reservoir for reducing agent (3) and in the flow direction opening into said exhaust gas pipe upstream of said mixer (5) and a catalyst (7) in the flow direction downstream of said mixer (5),
**characterized in that**
said mixer (5) is formed according to one of the claims 1 to 13.

## Revendications

1. Mélangeur pour un dispositif (10) pour la réduction catalytique sélective des gaz d'échappement des moteurs à combustion interne, pour une répartition uniforme d'un agent réducteur (3) dans le flux de gaz d'échappement (1) qui est introduit dans ledit flux de gaz d'échappement (1) à l'entrée du catalyseur, dans lequel ledit mélangeur comprend une structure d'éléments mélangeurs (21) à travers lesquels le mélange de gaz d'échappement (1) et d'agent réducteur (3) doit circuler et qui sont adaptés pour un chauffage électrique direct avec un courant électrique circulant à travers eux en raison de leur résistance électrique,
**caractérisé en ce que**
ladite structure d'éléments mélangeurs (21) est agencée sensiblement en forme d'anneau et **en ce que** lesdits éléments mélangeurs individuels (21) sont électriquement interconnectés en série de manière à former un circuit de chauffage.

2. Mélangeur selon la revendication 1, **caractérisé en ce que** lesdits éléments mélangeurs ont la forme d'aubes de turbine.

3. Mélangeur selon une des revendications 1 à 2, **caractérisé en ce que** lesdits éléments mélangeurs (21) comprennent un alliage de ligne de chauffage.

4. Mélangeur selon une des revendications 1 à 3, **caractérisé en ce que** le contact électrique à l'alimentation électrique est fait par l'intermédiaire d'une broche (35) qui isolée par un manchon (25) est reliée à un boîtier (29) dudit mélangeur (5).

5. Mélangeur selon une des revendications 1 à 4, **caractérisé en ce que** ladite alimentation électrique est réalisée dans la direction radiale par rapport audit flux de gaz d'échappement (1).

6. Mélangeur selon une des revendications 1 à 4, **caractérisé en ce que** ladite alimentation électrique est réalisée dans la direction axiale ou coaxiale par rapport audit flux de gaz d'échappement (1).

7. Mélangeur selon l'une des revendications 1 à 6, **caractérisé en ce que** la connexion à la masse est réalisée par l'intermédiaire d'une broche qui isolée par un manchon est reliée à un boîtier (29) dudit mélangeur.

8. Mélangeur selon l'une des revendications 1 à 6, **caractérisé en ce que** ladite connexion à la masse est réalisée par l'intermédiaire d'une section de tuyau (29) en contact avec la masse d'un boîtier dudit mélangeur.

9. Mélangeur selon l'une des revendications précédentes, **caractérisé en ce que** lesdits éléments mélangeurs (21) sont réalisés à partir d'une bande de tôle (23) par poinçonnage et pliage et ladite bande de tôle (23) comprenant lesdits éléments mélangeurs (21) est pliée en une forme d'anneau.

10. Mélangeur selon l'une des revendications 1 à 9, **caractérisé en ce que** lesdits éléments mé-langeurs (21) sont destinés à être fixés munis de pattes (33), ou lesdites pattes (33) sont reçues entre des plaques isolantes (31) maintenues entre des brides de section de tuyau (27) des sections de tuyau (29) d'un boîtier dudit mélangeur.

11. Mélangeur selon l'une des revendications 1 à 10, **caractérisé en ce que** lesdits éléments mélangeurs (21) sont pour une rigidité mécanique munie de plis.

12. Mélangeur selon l'une des revendications 10 ou 11, **caractérisé en ce que** lesdites plaques isolantes (31) comprennent de la micanite.

13. Mélangeur selon l'une des revendications précédentes, **caractérisé en ce que** la résistance électrique des éléments mélangeurs individuels varie.

14. Dispositif pour la réduction catalytique sélective des gaz d'échappement dans un moteur de combustion interne, en particulier un moteur à combustion de véhicule automobile, comportant un tuyau de gaz d'échappement menant à un mélangeur (5) et ayant un tuyau d'agent réducteur menant à un réservoir pour agent réducteur (3) et dans le sens d'écoulement s'ouvrant dans ledit tuyau de gaz d'échappement en amont dudit mélangeur (5) et d'un catalyseur (7) dans la direction d'écoulement en aval dudit mélangeur (5),
**caractérisé en ce que**
ledit mélangeur (5) est formé selon l'une des revendications 1 à 13.
